# EUROPEAN PATENT APPLICATION

(11) **EP 2 290 614 A1**
(43) Date of publication of application: **02.03.2011**
(21) Application number: 09769862.5
(22) Date of filing: 16.06.2009
(51) Int. Cl.: G06T 17/40, G06T 15/50, G06T 15/70, H04N 5/91

(54) **SYNTHESIS DEVICE AND SYNTHESIS METHOD**

(30) Priority: 23.06.2008 JP 2008162904; 30.10.2008 US 109602 P
(71) Applicant: Panasonic Corporation, Kadoma-shi Osaka 571-8501 (JP)
(72) Inventor: LEICHSENRING, Germano, Osaka 540-6207 (JP); KANAMARU, Tomokazu, Osaka 540-6207 (JP)
(74) Representative: Grünecker, Kinkeldey, Stockmair & Schwanhäusser Anwaltssozietät
(86) International application number: PCT/JP2009/002738
(87) International publication number: WO 2009/157152

(57) **Abstract**

In synthesizing live-action video and CG, when live-action video is shot by a moving camera, generation of CG that moves in accordance with the move of the live-action video without causing visual discomfort required a difficult operation such as programming in advance to precisely adjust the display timing and the display position of the CG. The present invention is to generate CG in accordance with live-action video shot by a moving camera with minimum visual discomfort, thereby creating a highly realistic synthesized video image.

## Description

### [Technical Field]

The present invention relates to a synthesis device that synthesizes a video image constituting a digital stream and a video image drawn using computer graphics.

### [Background Art]

Thanks to increasing capacity of a recording medium, speeding-up of image processing, and the like, elaborate CG (Computer Graphics) can be drawn at high speed even with household appliances. Such CG is widely used in video productions such as movies and games, and productions, etc. where CG is synthesized with live-action video, have been provided.

For synthesizing CG and live-action video, there is a technique to make the position of a light source in a virtual space for rendering the CG coincide with the position of a light source in the real space where the live-action video was shot, so that a highly realistic synthesized video image can be created.

Patent Literature 1 discloses an image display device that makes the shading of live-action video coincide with that of CG by drawing the CG with the use of data showing the position of a light source in the real space, so that highly realistic CG can be synthesized with the live-action video.

### [Cited Document List]

### [Patent Literature]

[Patent Literature 1]
   Japanese Patent Application Publication No. 2005-107968

### [Summary of Invention]

### [Technical Problem]

However, live-action video includes many scenes which are shot by a camera while the camera is moving. To synthesize CG and live-action video without causing visual discomfort to a viewer, it needs to be programmed in advance that the drawing position of the CG on the screen moves as an object in the live-action video moves on the screen due to the move of the camera. Otherwise, the CG stays at a given position on the screen while the object in the live-action video moves due to the move of the camera. As a result, the move of the live-action video does not coincide with that of the CG, which results in visual discomfort.

However, it is difficult to program to precisely adjust the display timing and the display position of CG such that the CG moves in accordance with the move of the live-action video.

It is an object of the present invention to provide a synthesis device that generates CG, which is to be synthesized with live-action video shot by a moving camera, with the minimum visual discomfort, thereby generating a highly realistic synthesized video image.

### [Solution to Problem]

To solve the above problem, a synthesis device includes an acquisition unit operable to acquire, from a digital stream constituted from a plurality of video frames, video frame identifiers identifying the respective video frames, each video frame identifier being associated with a parameter showing a shooting condition under which a corresponding one of the video frames was shot, a generation unit operable to generate graphics images according to parameters such that shooting conditions shown by the parameters are reflected to display manners of the graphics images; and a synthesis unit operable to synthesize each video frame and one of the graphics images generated according to a parameter associated with a video frame identifier of the video frame.

### [Advantageous Effects of Invention]

According to the synthesis device of the present invention, each video frame is associated with a parameter showing a shooting condition of the video frame, and reflecting the shooting condition of the video frame to a CG image with the use of the parameter enables highly realistic synthesized video to be generated.

Here, the shooting condition means camera placement showing where the camera is placed and to which direction the camera is pointed and a light source setting showing where the lighting is placed.

Here, each parameter may include a camera placement information piece showing placement of a camera that shot a corresponding one of the video frames.

The camera placement information piece is used as one of the parameters showing the shooting condition required for generation of a CG image to be synthesized with the video frame. Thus, the move of the CG image is precisely adjusted to the live-action video that moves on the screen due to the change of the camera placement. Thus, highly realistic video can be synthesized.

Here, each camera placement information piece may include a shooting position information piece that shows a shooting position of the camera, and each graphics image generated by the generation unit may be an image, of an object formed in a virtual space, that is to be obtained when the object is shot from a shooting position shown by the shooting position information piece.

The video frame identifier is associated with the shooting position of the camera that shot the video frame. When a CG image to be synthesized with the video frame is generated, the viewpoint of the live-action video coincides with that of the CG image by making the position of the camera in the virtual space coincide with the shooting position of the camera. Thus, highly realistic video can be synthesized.

The shooting position of the camera is the most important factor that shows the placement of the camera.

The digital stream may include time information pieces each showing a timing at which a corresponding one of the video frames is to be displayed. Each camera placement information pieces may be associated with a video frame identifier via a corresponding one of the time information pieces. The synthesis device may further include a decode unit that decodes the digital stream. The decode unit may decode each video frame at a timing indicated by a corresponding one of the time information pieces, and transmit a camera placement information piece with regard to the video frame to the generation unit when the video frame is decoded.

A camera placement information piece required for generating a CG image to be synthesized with a video frame is transmitted in accordance with a display time point of the video frame, by which the video frame and the CG image can be synchronized.

The digital stream may further include a video frame identifier of a video frame that is not associated with a camera placement information piece. When a time information piece acquired from the digital stream is associated with a camera placement information piece, the decode unit may transmit the camera placement information piece to the generation unit. When a time information piece acquired from the digital stream is not associated with a camera placement information piece, the decode unit may retransmit a camera placement information piece, which was transmitted to the generation unit last time, to the generation unit.

It is unlikely that camera placement information pieces significantly change as playback progresses. Accordingly, if a camera placement information piece is not associated with a video frame, another camera placement information piece associated with the immediately preceding video frame can be substituted.

Here, each parameter may include a light source setting information piece showing a setting of a light source of a corresponding one of the video frames.

The light source setting is used as a parameter showing a shooting condition required for generation of a CG image to be synthesized with the video frame, which can make shading of the CG image more realistic.
Here, each light source setting information piece includes an illumination position information piece showing an illumination position of the light source, and each graphics image generated by the generation unit may be an image, of an object in a virtual space, that is to be obrtained when the object is illuminated from a position shown by the illumination position information piece.

In generating a CG image to be synthesized with a video frame, a light source is reproduced at the same position in the virtual space as the light source position used for shooting the video frame, so that the shading of the live-action video coincides with that of the CG. Thus, highly realistic video can be synthesized.

Here, each light source setting information piece may include an illumination intensity information piece showing illumination intensity of the light source, and each graphics image generated by the generation unit may be an image, of the object formed in the virtual space, that is to be obtained when the object is illuminated at intensity shown by the illumination intensity information piece.

In generating a CG image to be synthesized with a video frame, the light source that has the same intensity as the light source used for shooting the video frame is reproduced in the virtual space, so that the shading of the live-action video coincides with that of the CG. Thus, highly realistic video can be synthesized.

Here, each camera placement information piece may include a shooting direction information piece that shows a shooting direction of the camera, and each graphics image generated by the generation unit may be an image, of the object formed in the virtual space, that is to be obtained when the object is shot from a direction shown by the shooting direction information piece.

A shooting direction of the camera that shot the video frame is associated with the video frame identifier. In generating a CG image to be synthesized with the video frame, the shooting direction in the virtual space is made to coincide with the direction of the camera shown by the shooting direction information, so that the viewpoint of the live-action video coincides with that of the CG. Thus, highly realistic video can be synthesized.

Here, each light source setting information piece may include a color information piece showing a color of the light source, and each graphics image generated by the generation unit may be an image, of the object formed in the virtual space, that is to be obtained when the object is illuminated by light whose color is shown by the color information piece.

In generating a CG image to be synthesized with the video frame, the light source having the same color as the light source used for shooting the video frame is reproduced in the virtual space, so that the color of the live-action video coincides with that of the CG. Thus, highly realistic video can be synthesized.

Here, each light source setting information piece may include an illumination direction information piece showing an illumination direction of the light source, and each graphics image generated by the generation unit may be an image, of the object formed in the virtual space, that is to be obtained when the object is illuminated by light in an illumination direction shown by the illumination direction information piece.

In generating a CG image to be synthesized with the video frame, the light source whose illumination direction is the same as that of the light source used for shooting the video frame is reproduced in the virtual space, so that the shading of the live-action video coincides with that of the CG image. Thus, highly realistic video can be synthesized.

### [Brief Description of Drawings]

Fig. 1 shows a usage pattern of a playback apparatus pertaining to Embodiment;
Fig. 2 shows the structure of a BD-ROM played back by the playback apparatus pertaining to Embodiment;
Fig. 3 shows the layer model of the BD-ROM played back by the playback apparatus pertaining to Embodiment;
Fig. 4 shows a playback mode of the playback apparatus pertaining to Embodiment;
Fig. 5 shows the functional structure of the playback apparatus pertaining to Embodiment;
Fig. 6 shows the functional structure of a rendering engine constituting the playback apparatus pertaining to Embodiment;
Fig. 7 shows the setting of a camera in the virtual space;
Fig. 8 shows a relation between the camera setting and the synthesized video image in the virtual space;
Fig. 9 shows correspondence between video frame IDs and placement and setting information pieces pertaining to Embodiment;
Fig. 10 shows an example of camera placement information and light source setting information;
Figs. 11A-11D show operations of the playback apparatus of Embodiment for playing back video shot by a camera while the camera is moving;
Figs. 12A-12I show operations of a synthesis device in the playback apparatus of Embodiment for playing back video shot by a camera while the camera is moving;
Figs. 13A-13D show operations of the playback apparatus of Embodiment for playing back video shot when the light source is moving; and
Fig. 14 shows operation of generating synthesized video by the playback apparatus pertaining to Embodiment.

### [Description of Embodiments]

In Embodiment, a description is given of a playback apparatus using a synthesis device for synthesizing CG with video shot by a camera while the camera is moving.

### «Usage Pattern>>

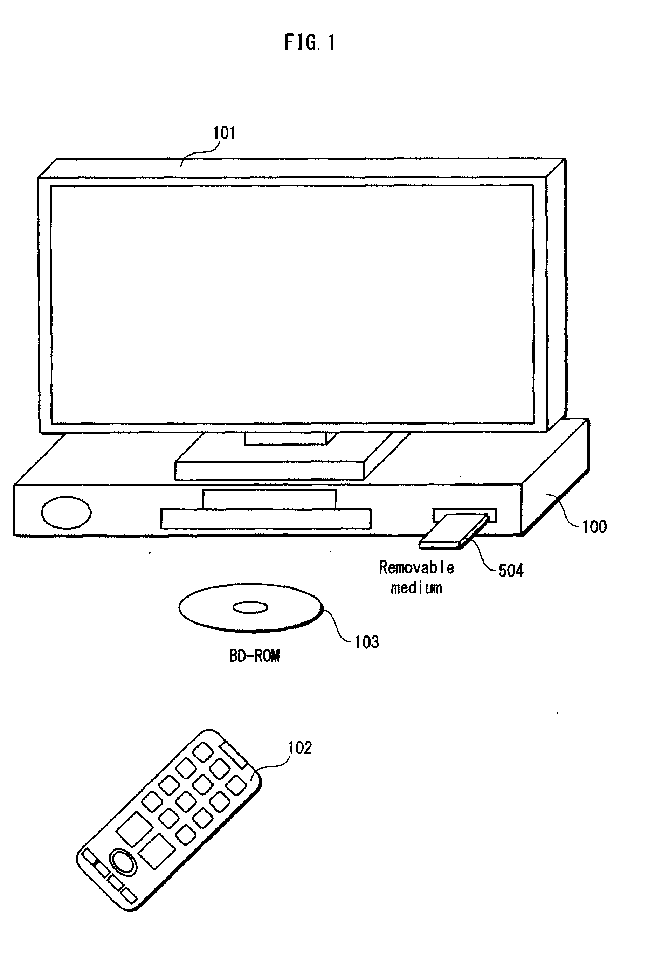

First, a description is given of a usage pattern of a playback apparatus 100 pertaining to Embodiment with the use of Fig. 1. The playback apparatus 100 pertaining to Embodiment is used for enjoying movies and the like supplied on a medium such as a BD-ROM 103 used in a home theater system constituted from a TV 101 for displaying video and a remote controller 102 for manipulating the playback apparatus 100. This home theater system is provided with a removable medium 504 for recording thereon supplementary data as well as a content recorded on the BD-ROM 103. The playback apparatus 100 pertaining to Embodiment reads out a content from the BD-ROM 103 and the removable medium 504. In Embodiment, an AV (Audio-Video) application for playing back a content such as a movie is mainly described. However, instead of the BD-ROM 103, a recording medium such as a CD-ROM and a DVD-ROM is also applicable.

### «Data Structure»

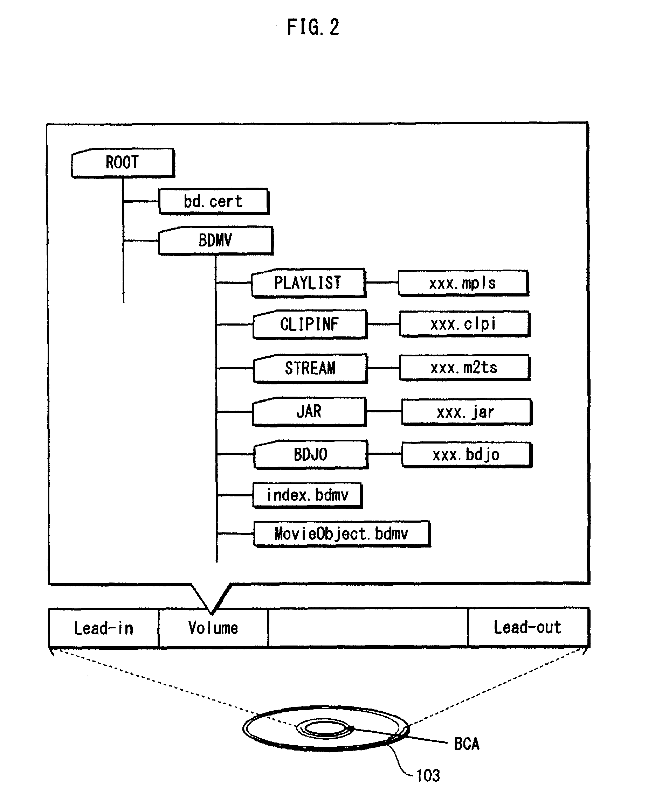

Subsequently, a description is given of the structure of data recorded on the BD-ROM 103 with the use of Fig. 2.

As with other optical discs such as CD-ROM and DVD-ROM, the BD-ROM 103 has a recording area that expands in a spiral manner from its inner circumference to its outer circumference, and has a logic address space for storing therein logic data between a lead-in of the inner circumference and a lead-out of the outer circumference.

Within the lead-in, there is a special area called a BCA (Burst Cutting Area). Since this area cannot be tampered with after having been recorded in a factory, this area is often used for, for example, a copyright protection technique or the like.

The logic address space stores therein file system information at the top thereof and application data such as video data.

The file system used here is UDF (Universal Disk Format), ISO 9660 or the like. With such a file system, files classified and recorded in hierarchical directories on a BD-ROM can be read out.

A digital stream and its associated data recorded on the BD-ROM 103 played back by the playback apparatus 100 pertaining to Embodiment are stored in a directory BDMV that is immediately under the root directory of the BD-ROM 103.

Under the directory BDMV, there are five sub-directories called PLAYLIST, CLIPINF, STREAM, BDJO, and JAR, and two files index. bdmv and MovieObject. bdmv. A description is given of each directory and files. Hereinafter, an extension indicates the last element in a file name. More specifically, when the file name is broken down into elements with "." (period), and when the elements are arranged in the appearing order in the file name, the extension is the last element in the file name. For example, when the file name is xxx.yyy, yyy is the extension.

The directory PLAYLIST has a file with an extension, mpls. This file stores therein playlist information. The playlist information is information for recording therein a playback section defined by the start and end position of digital stream playback.

The directory CLIPINF has a file with an extension, clpi. This file is clip information that corresponds to each digital stream. The clip information has information on a coding format, a frame rate, a bit rate, resolution and the like of the digital stream, and information indicating correspondence between playback time and a start position of a GOP (Group of Pictures).

The directory STREAM stores therein a file with an extension, m2ts. This file stores therein a digital stream being the main body of a movie. The digital stream is in MPEG-TS (Transport Stream) format, and is obtained by multiplexing a plurality of streams. The digital stream may include a video stream indicating video of the movie and an audio stream indicating sound of the movie. The digital stream may include a sub-video stream indicating captions of the movie.

The directory JAR has a file with an extension, jar. This file is a JAVA™ archive file. The JAVA™ archive file is a file storing therein a JAVA™ application program performing dynamic scenario control with the use of a JAVA™ virtual machine. This file is used to control playback of each title indicating a playback unit of a content on the BD-ROM with the use of the JAVA™ application.

The directory BDJO has a file with an extension, bdjo. This file stores therein a BD-J object. The BD-J object is information defining a title of a playback unit of a content by associating the digital stream indicated by the PlayList information with the application. The BD-J object shows an application management table and a list of playlists that can be played back by the title. One application is composed of one or more JAVA™ archive files. The application management table shows an identifier of the application and identifiers of the JAVA™ archive files that belong to the application.

The file index.bdmv stores therein management information of the entire BD-ROM. The management information includes information, such as an organization ID (32-bit identifier) specifying a provider of a movie and a disc ID (128-bit identifier) allocated to each BD-ROM provided by the provider. After placement of a disc in the playback apparatus, the file index.bdmv is initially read so that the disc is uniquely identified by the playback apparatus. That is to say, the playback apparatus can recognize a movie and its provider recorded on the BD-ROM. In addition, the file index.bdmv has a table showing a plurality of titles reproducible by the BD-ROM, the titles being each associated with a BD-J object defining the title.

The file MovieObject.bdmv includes a scenario program describing a scenario to dynamically change the playback progress when each title is played back in HDMV mode. The HDMV mode is described later.

### «Layer Model»

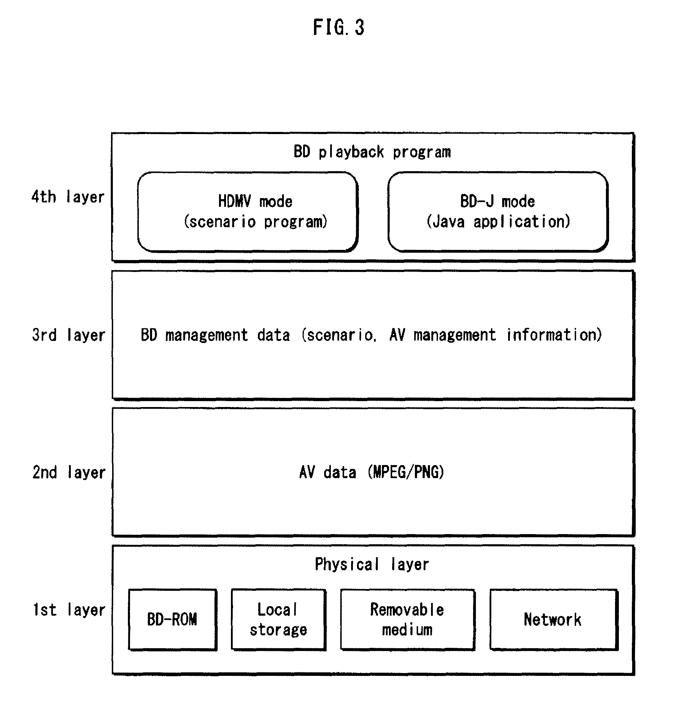

Fig. 3 shows a layer model for playback control. A description is given on each layer as follows.

A first layer is a physical layer. This layer defines control on the recording media with regard to which recording medium supplies the stream main body to be processed. The stream is supplied not only from the BD-ROM, but also from any recording media such as a local storage and a removable medium and network. Here, the local storage is a recording medium, having been installed in a playback apparatus, such as a hard disk. Accordingly, the control defined by the first layer is control on disc access, card access, network communication and the like to/with the supply sources, such as a local storage, removable media and networks.

A second layer is a layer of AV data. The second layer defines what decoding method is used to decode the stream supplied from the first layer.

A third layer is a layer of BD management data. The third layer defines a static scenario of the stream. The static scenario is playlist information and clip information predefined by a disc creator. This third layer defines the playback control, based on the playlist information and the clip information.

A fourth layer is a layer of a BD playback program. The fourth layer defines the dynamic scenario in the stream. The dynamic scenario is a program for executing at least one of the playback progress of the AV stream and the control progress of the playback. The playback control by the dynamic scenario is changed according to a user operation of the apparatus. There are two modes in the dynamic playback control: one is HDMV mode and the other is BD-J mode. The HDMV mode is for playing back moving image data recorded on the BD-ROM in a playback environment peculiar to an audio-video equipment. In the HDMV mode, a scenario program, which has a scenario described thereon for dynamically changing the playback progress, controls the playback. The BD-J mode is for playing back the moving image data recorded on the BD-ROM while enhancing the added value of the moving image data. In the BD-J mode, the playback control is performed according to the JAVA™ application.

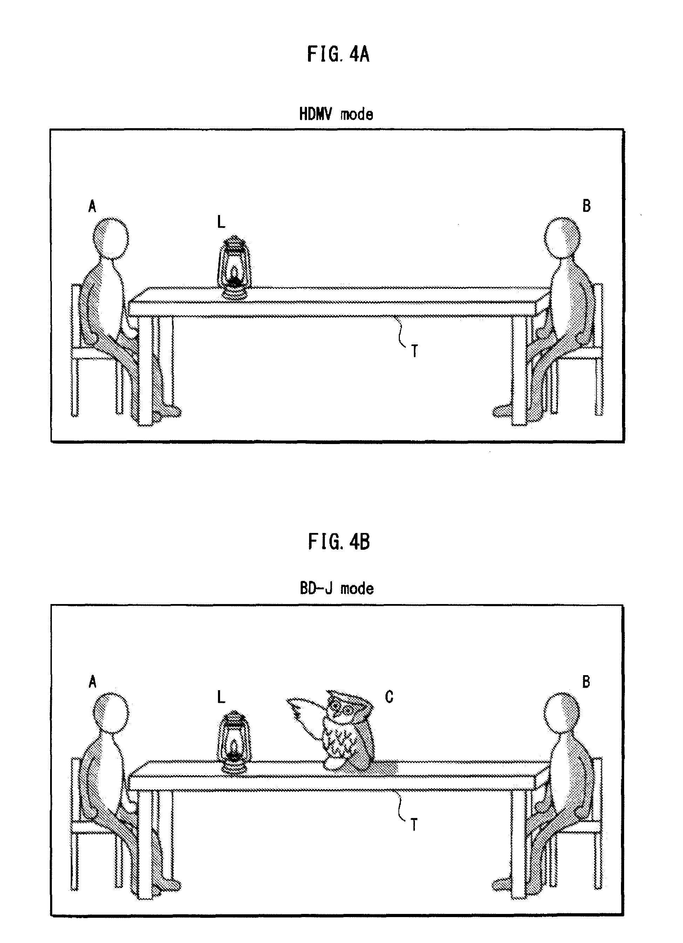

Figs. 4A and 4B show scenes of moving images played back in HDMV mode and BD-J mode, respectively.

Fig. 4A shows a scene of a moving image played back in HDMV mode. In HDMV mode, the playback control is performed to display a menu and cause a user to make a selection on the menu to allow playback to proceed.

Fig. 4B shows a scene of a moving image played back in BD-J mode. In BD-J mode, playback control is performed by a JAVA™ application that is described in the JAVA™ language interpretable by a JAVA™ virtual machine. BD-J mode can define the playback control showing as if a CG character is moving in the live-action video. In Fig. 4B, the CG character is drawn on the table T.

### «Functional Structure of Playback Apparatus»

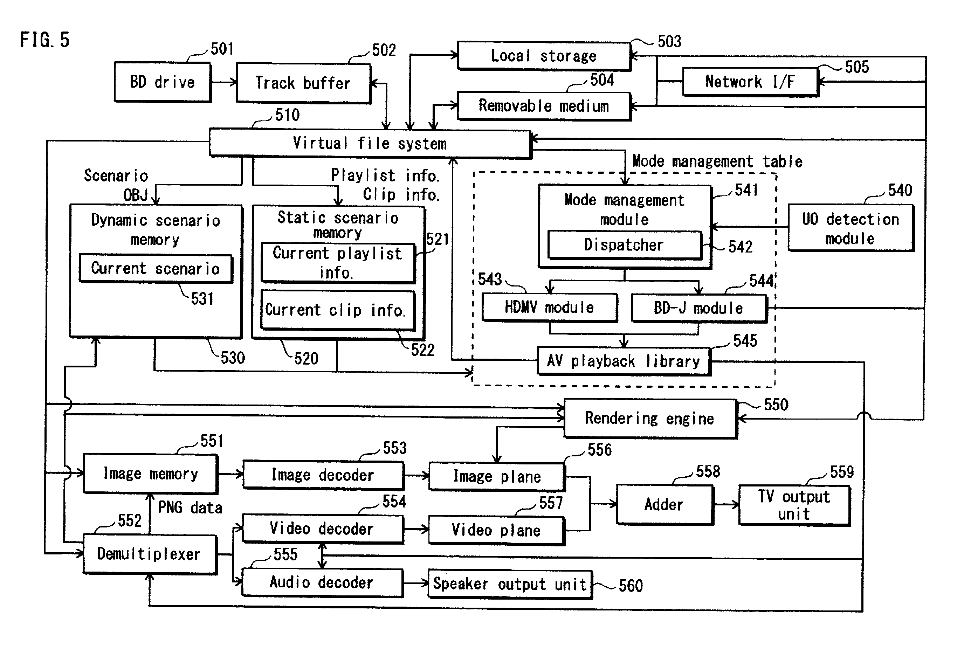

Fig. 5 is a block diagram roughly showing the functional structure of the playback apparatus 100 pertaining to Embodiment.

The playback apparatus 100 pertaining to Embodiment includes a BD-ROM drive 501, a track buffer 502, a local storage 503, a removable medium 504, a network interface 505, a virtual file system 510, a static scenario memory 520, a dynamic scenario memory 530, a UO detection module 540, a mode management module 541, a dispatcher 542, an HDMV module 543, a BD-J module 544, an AV playback library 545, a rendering engine 550, an image memory 551, a demultiplexer 552, an image decoder 553, a video decoder 554, an audio decoder 555, an image plane 556, a video plane 557, an adder 558, a TV output unit 559, and a speaker output unit 560.

The following describes each constituent.

The BD-ROM drive 501 performs loading and ejecting of the BD-ROM, and gains access to the BD-ROM when the BD-ROM is loaded.

The track buffer 502 is realized by FIFO memory, and stores therein, in first-in-first-out system, data having read from the BD-ROM.

The demultiplexer 552 reads out and demultiplexes a digital stream that is stored in the BD-ROM loaded on the BD-ROM drive 501, the local storage 503, or the removable medium 504 via the virtual file system 510. The demultiplexer 552 outputs video frames and audio frames obtained by the demultiplexing to the video decoder 554 and the audio decoder 555, respectively. When sub-video streams are demultiplexed in the digital stream, the demultiplexer 552 outputs the sub-video stream obtained by the demultiplexing to the image memory 551, and navigation button information to the dynamic scenario memory 530. Note that the demultiplexing performed by the demultiplexer 552 includes conversion processing to convert TS (Transport Stream) packets to PES (Packetized Elementary Stream) packets. The demultiplexer 552 extracts PTS (Presentation Time Stamp) from the PES packet and issues the PTS to the video decoder 554 and the rendering engine 550 to synchronize the live-action video with the CG.

The video decoder 554 decodes the video frames outputted from the demultiplexer 552, and writes pictures in an uncompressed format in the video plane 557.

The video plane 557 is memory that stores therein the pictures in an uncompressed format.

The audio decoder 555 decodes the audio frames outputted from the demultiplexer 552, and outputs the audio data in an uncompressed format to the speaker output unit 560.

The image memory 551 is a buffer that stores therein the sub-video stream read by the demultiplexer 552, the PNG (Portable Network Graphics) data included in the navigation button information, or an image file that is read from the BD-ROM, the removable medium 504 or the local storage 503 via the virtual file system 510.

The image decoder 553 expands the sub-video stream, the PNG data, and the image files that are stored in the image memory 551, and writes the expanded data in the image plane 556.

The image plane 556 is memory that has a memory area for one screen. It has, arranged in a bitmap, the sub-video stream, PNG data, and image files expanded by the image decoder 553. The images expanded in the image plane 556 appear on the screen as they are. For example, if various menus are stored in the sub-video stream, when the menus are expanded in the image plane 556, the image of the menus appears on the screen.

The adder 558 synthesizes the picture data in an uncompressed format stored in the video plane 557 with the image expanded in the image plane 556, and outputs the synthesized data to the TV output unit 559.

The static scenario memory 520 is memory that stores therein status scenario information that is currently subject to processing by the HDMV module 543 or the BD-J module 544. The static scenario information is playlist information and stream information. The static scenario information is information for defining a playback section of a content recorded on the BD-ROM 103. When the playback of the content is selected by a user operation, the playback is executed in accordance with the static scenario information.

The dynamic scenario memory 530 is memory that stores therein the dynamic scenario information that is currently subject to execution by the HDMV module 543 or the BD-J module 544. The dynamic scenario information is a scenario program in HDMV mode and a JAVA™ class file in BD-J mode. The dynamic scenario information is a program showing a menu and the like showing which of a plurality of contents recorded on the BD-ROM 103 to be played back. A scenario program executed in HDMV mode enables a simple menu similar to that of a conventional DVD to be displayed. On the other hand, a JAVA™ class file executed in BD-J mode enables a complicated menu, such as appearance of a CG character or preview of video images of a selected content, to be displayed. The playback apparatus 100 pertaining to Embodiment can synthesize a CG character and a previewed video image without causing visual discomfort.

The HDMV module 543 is a DVD virtual player that is the main executing entity in HDMV mode, and executes the scenario program read by the dynamic scenario memory 530.

The BD-J module 544 is a JAVA™ platform, and includes a JAVA™ virtual machine. The BD-J module 544 generates a JAVA™ object from a JAVA™ class file that is read by the dynamic scenario memory 530. The JAVA™ object is described in the JAVA™ language and executed by the JAVA™ virtual machine. The Java virtual machine causes the BD-J module 544 to convert the JAVA™ object described in the JAVA™ language to a native code, and to execute the converted native code.

The UO detection module 540 detects user operations performed on the remote controller or a front panel of the playback apparatus, and outputs UO information showing the user operations to the mode management module 541.

The mode management module 541 holds the mode management table read from the BD-ROM loaded on the BD-ROM drive 501, the local storage 503, or the removable medium 504 and performs mode management and branch control. The mode management by the mode management module 541 is to decide which of the HDMV module 543 and the BD-J module 544 to execute the dynamic scenario. More specifically, in HDMV-mode, the HDMV module 543 executes the dynamic scenario, and in BD-J mode, the BD-J module 544 executes the dynamic scenario.

The dispatcher 542 outputs UO information to an appropriate module for executing the current mode of the playback apparatus. For example, when receiving UO information indicating user operations, such as push of an up-to-down, right-to-left button or an activation button during the HDMV mode execution, the dispatcher 542 outputs the UO information to the module in HDMV mode.

The rendering engine 550 is provided with infrastructure software, such as OPEN-GL. Following an instruction from the BD-J module 544, the rendering engine 550 renders model information. The model information is information on coordinates, lines connecting the coordinates, and color of a surface surrounded by the lines that are necessary for modeling the object drawn as CG. The object of CG drawn based on the model information is referred to as a CG model. The rendering is performed in synchronization with PTS issued by the demultiplexer 552. The rendered CG is outputted to the image plane 556.

The AV playback library 545 executes AV playback functions and playlist playback functions in response to a function call from the HDMV module 543 and the BD-J module 544. The AV playback functions are a group of functions provided in a DVD player and a CD player, and includes processing, such as playback start, playback stop, pause, release of a pause, release of a still-image function, fast-forward whose playback speed is specified by an immediate, reverse whose playback speed is specified by an immediate, sound switching, sub-video switching, and angle switching. The playlist playback functions correspond to start and stop of the playback according to the playlist information out of the AV playback functions.

The network interface 505 is controlled by the BD-J module 544, and is used for downloading additional content, which is published on the Internet, on the local storage 503 and the removable medium 504. The additional content is a content absent in the original BD-ROM, such as additional sub-audio, captions, bonus video, and an application.

The local storage 503 and the removable medium 504 are used for storing the downloaded additional content and data used by the application. Each BD-ROM has a different storage area for storing the additional content, and each application has a different area for holding data. The local storage 503 and the removable medium 504 are used for storing therein merge management information. The merge management information describes a merge rule that defines how to merge the downloaded additional content with data on the BD-ROM.

The virtual file system 510 is a file system for accessing a virtual BD-ROM by merging, into the content on the BD-ROM, the additional video content that is stored in the local storage 503 or the removable medium 504, based on the merge management information. The virtual BD-ROM is referred to as a virtual package. The virtual package can be accessed from the HDMV module 543 and the BD-J module 544, as with the original BD-ROM. In playing back a content in the virtual package, the playback apparatus 100 performs playback control with the use of data on both of original data the BD-ROM and data on the local storage 503 or the removable medium 504.

The TV output unit 559 outputs a video image synthesized by the adder 558 to the TV 101.

The speaker output unit 560 outputs an audio signal decoded by the audio decoder 555 to a speaker.

This concludes the constituents of the playback apparatus 100.

### «Functional Structure of Rendering Engine»

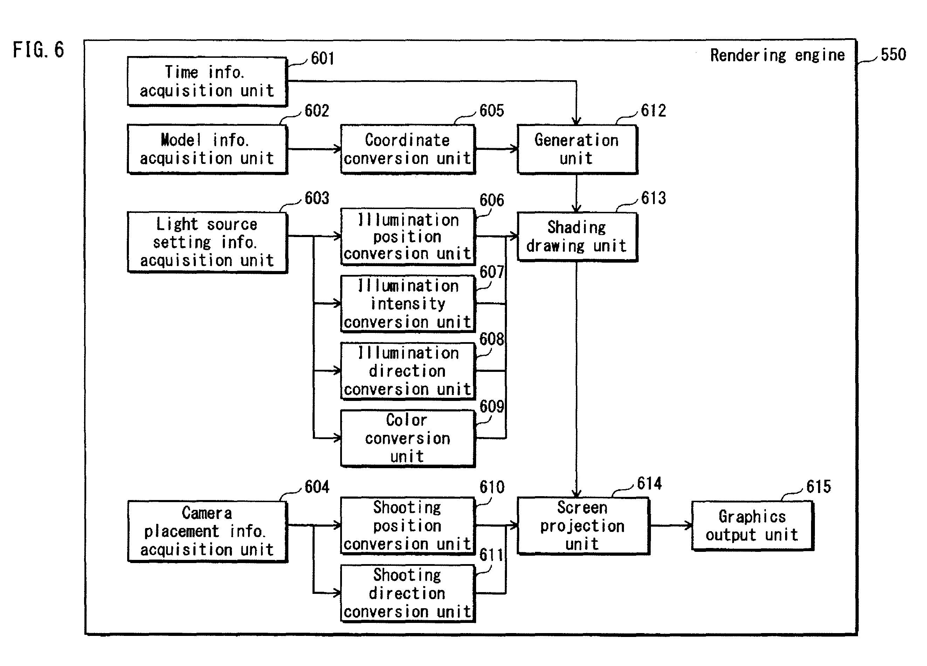

Subsequently, the functional structure of the rendering engine 550 shown in Fig. 5 is described with the use of Fig. 6.

The rendering engine 550 includes a time information acquisition unit 601, a model information acquisition unit 602, a light source setting information acquisition unit 603, a camera placement information acquisition unit 604, a coordinate conversion unit 605, a illumination position conversion unit 606, a illumination intensity conversion unit 607, an illumination direction conversion unit 608, a color conversion unit 609, a shooting position conversion unit 610, a shooting direction conversion unit 611, a generation unit 612, a shading drawing unit 613, a screen projection unit 614, and a graphics output unit 615.

The time information acquisition unit 601 acquires a PTS separated by the demultiplexer 552 and transmits it to the generation unit 612.

The model information acquisition unit 602 acquires model information from the virtual file system 510 and transmits it to the coordinate conversion unit 605.

The coordinate conversion unit 605 converts coordinates included in the model information received from the model information acquisition unit 602 to coordinates in the coordinate system in the virtual space for rendering CG.

The light source setting information acquisition unit 603 acquires light source setting information transmitted from the demultiplexer 552, and transmits information in the light source setting information to an appropriate conversion unit according to a type of the information. More specifically, an illumination position information piece showing the illumination position of the light source is transmitted to the illumination position conversion unit 606. An illumination intensity information piece showing the intensity of the light source is transmitted to the illumination intensity conversion unit 607. An illumination direction information piece showing the illumination direction of the light source is transmitted to the illumination direction conversion unit 608. A color information piece showing the color of the light source is transmitted to the color conversion unit 609.

The camera placement information acquisition unit 604 acquires camera placement information transmitted from the demultiplexer 552, and transmits information included in the camera placement information to an appropriate conversion unit according to a type of the information. More specifically, shooting position information showing the shooting position of the camera is transmitted to the shooting position conversion unit 610. Shooting direction information showing the shooting direction of the camera is transmitted to the shooting position conversion unit 610.

Using coordinate data converted by the coordinate conversion unit 605 and a PTS acquired by the time information acquisition unit 601, the generation unit 612 generates a CG model that is to be displayed at a playback time shown by the PTS.

The shading drawing unit 613 shades an object with the use of the converted light source setting information on receiving data of the CG model generated by the generation unit 612. The shading drawing unit 613 draws shading of the object disposed in the virtual space using light emitted from the light source shown by the light source setting information.

On receiving the data of the CG model shaded by the shading drawing unit 613, the screen projection unit 614 projects the CG model on the screen with the use of the converted camera placement information. Here, the screen is a rectangular flat surface, with a limited size, that is perpendicular to the shooting direction of the camera in the virtual space. The size of the screen is changeable according to the setting of the camera. What is projected on the screen corresponds to video images displayed on the actual screen. The screen projection unit 614 draws a two-dimensional image shot by a camera shown by the camera placement information, based on the CG model in the virtual space.

The graphics output unit 615 outputs the two-dimensional image projected by the screen projection unit 614 to the image plane 556.

This concludes the functional structure of the rendering engine 550.

It has been described above that the projection processing on the screen is executed after shading the entire CG model. Note that, however, in order to reduce the calculation amount, a range of the CG model that is to be projected on the screen may be cut out before actually shading the CG model, and the CG model in the cut out range may be shaded.

### «Relation between Camera Setting and Synthesized Video»

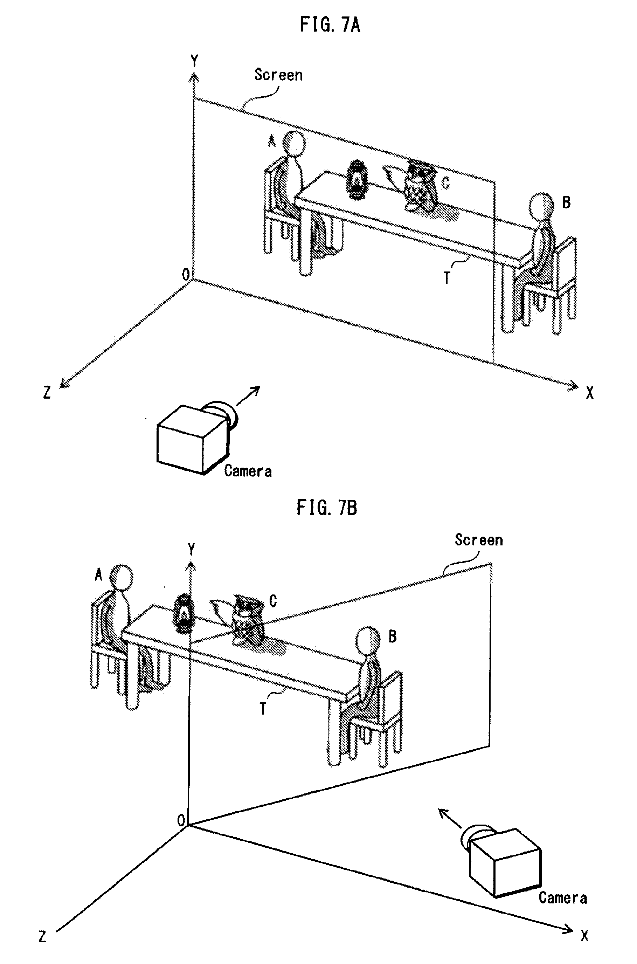

Figs. 7A and 7B show camera settings when the camera is shooting live-action video and coordinate relation in the virtual space for rendering CG.

In Fig. 7A, the characters A and B, the table T, and the lamp L are real, and the owl C is made of CG. Fig. 7A shows a situation where the characters A and B sitting at both sides of the table T are shot by the camera from one aspect. The coordinate axes XYZ in Fig. 7A define a virtual space for rendering CG. In this coordinate system, the owl C is drawn at the center of the table T.

To synthesize live-action video and CG, it is necessary to generate a two-dimensional image by projecting the CG generated in the virtual space on the screen. The camera settings that determine the position of the screen, which is the shooting position and the shooting direction of the camera, are set in the virtual space to coincide with those in the real space. Thus, the live-action video and the CG can be synthesized without causing visual discomfort.

That is to say, in generating CG to be synthesized with live-action video, each camera setting at the moment when a corresponding one of the live-action video images is shot is notified to the rendering engine 550. The rendering engine 550 reflects the notified camera setting to a display manner of a rendered CG image. Thus, the live-action video and the CG can be synthesized without causing visual discomfort.

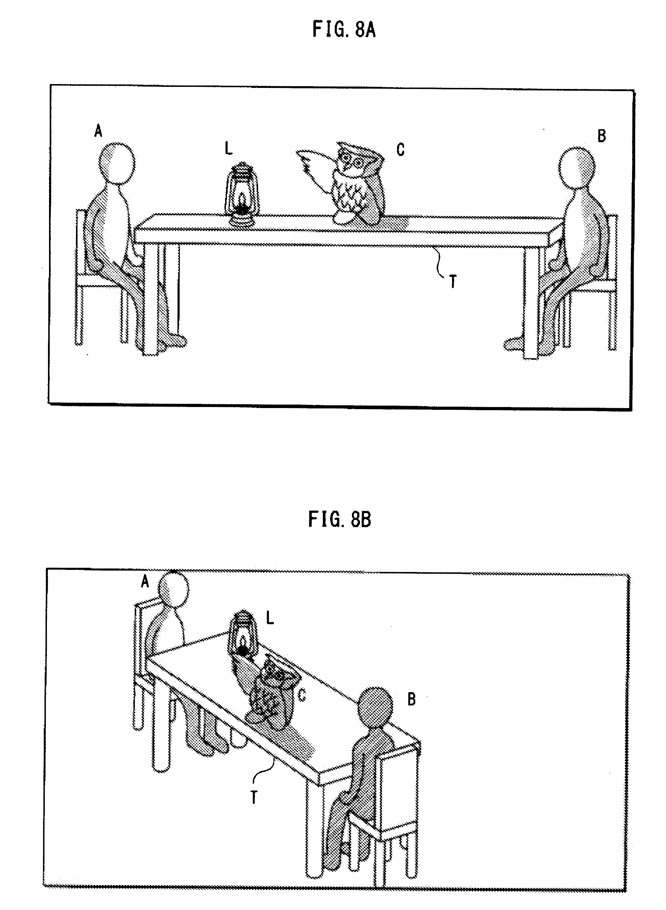

Fig. 8A shows a video image drawn on the screen in accordance with the camera setting in Fig. 7A.

Fig. 7B shows a video image of the same object that is shot at a different camera setting from that of Fig. 7A. In this case as well, the camera setting in the virtual space is changed in accordance with the change in the camera setting in the real space, so that a screen on which CG is to be projected is changed. Thus, the live-action video and the CG can be synthesized without causing visual discomfort.

That is to say, Fig. 8B shows a video image that is drawn on the screen in accordance with the camera setting in Fig. 7B. As shown in Fig. 8B, the position of the owl C drawn as CG on the screen is synchronized with the live-action video. In this way, a synthesized video image where the owl C is on the table T can be displayed.

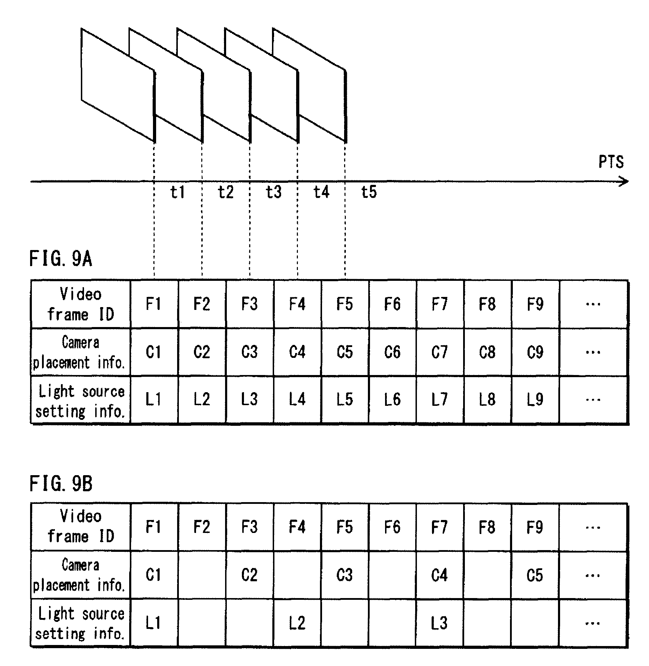

Fig. 9 shows that video frame IDs are each assigned to a corresponding one of video frames included in the digital stream, and that camera placement information pieces and light source setting information pieces assigned to the respective video frame IDs are embedded in the digital stream.

The digital stream has, recorded therein, PTSs each showing a display time point for a corresponding one of the video frames.

Fig. 9 shows that the video frames are associated with the respective display time points at which the video frames are displayed. For example, the frame ID of a video frame to be displayed at PTS = t1 on the time axis is F1, and the frame ID of a video frame to be displayed at PTS = t2 on the time axis is F2.

In Fig. 9A, a camera placement information piece and a light source setting information piece are associated with each video frame. For example, the video frame identified by the video frame ID F1 is associated with a camera placement information piece C1 and a light source setting information piece L1.

A CG image which is to be synthesized with the video frame identified by the video frame ID F1 has been conventionally generated based on the camera placement information piece C1 and the light source setting information piece L1.

According to the playback apparatus 100 pertaining to Embodiment, each video frame and information pieces are associated as set forth above. As a result, camera placement information pieces and light source setting information pieces can be sequentially reflected to the generation of CG as follows, for example. In displaying the video frame identified by the video frame ID F1 at the time point t1, a CG image is generated based on the camera placement information piece C1 and the light source setting information piece L1. In displaying the video frame identified by the video frame ID F2 at the time point t2, a CG image is generated based on the camera placement information piece C2 and the light source setting information piece L2.

Note that not every video frame needs to be associated with a camera placement information piece or a light source setting information piece. Fig. 9B shows an example where a camera placement information piece is associated with every two frames and where a light source setting information piece is associated with every three frames. When a video frame is not associated with a camera placement information piece or a light source setting information piece, the same values as ones in the immediately preceding video frame are used for the video frame. In this example, since the video frame ID F2 is not associated with a camera placement information piece or a light source setting information piece, the camera placement information piece C1 and the light source setting information piece L1 associated with the immediately preceding video frame ID F1 are used for the video frame ID F2.

### «Example of Setting Information»

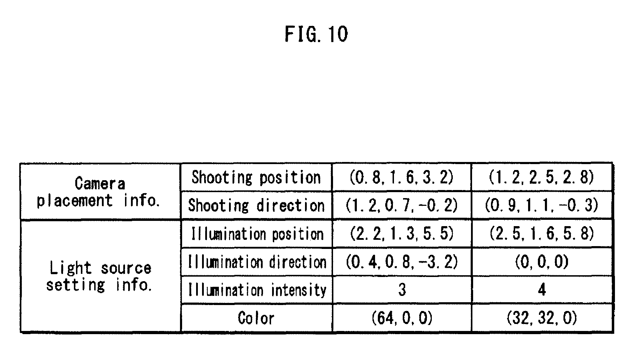

Fig. 10 shows an example of a camera placement information piece and a light source setting information piece.

The camera placement information piece includes a shooting position indicating a position at which the camera is set and a shooting direction to which the camera is directed.

The shooting position shows a positional vector in the coordinate system of the real space. Three elements showing one point in the three-dimensional space represent a position at which the camera is set.

The shooting direction shows a directional vector in the coordinate system of the real space. With the coordinates of an end point with respect to the origin point which is a starting point thereof, three elements showing one direction in the three-dimensional space represent a direction to which the camera is directed.

These information pieces are obtained while video is shot with the use of GPS (Global Positioning System) or by analyzing a position of an object in the shot video. These information pieces are recorded in advance in a stream by a device that records stream data.

The light source setting information piece includes an illumination position information piece showing a position at which the light source is set, an illumination direction information piece showing a direction to which the light source is directed, an illumination intensity information piece showing the intensity of light emitted from the light source, a color information piece showing the color of the light emitted from the light source.

The illumination position information piece shows a positional vector in the coordinate system of the real space. Three elements showing one point in the three-dimensional space shows a position at which the light source is set. Based on the position at which the light source is set, a lighted portion and a shaded portion of a CG model formed in the virtual space are calculated. For example, based on the relation between the position of the CG model and the position of the light source, the side of the CG model illuminated by the light source is brightly drawn, and the side of the CG model that is not illuminated by the light source is shaded.

The illumination direction information piece shows a directional vector in the coordinate system of the real space. With the coordinates of an end point with respect to the origin point which is a starting point thereof, three elements showing one direction in the three-dimensional space represent a direction to which the light source is directed. Note that the illumination direction (0, 0, 0) shown in Fig. 10 is assumed to be of an isotropic light source. Based on the direction to which light source is directed, a lighted portion and a shaded portion of the CG model formed in the virtual space are calculated. When light illuminated from the light source is directed to the CG model, the CG model is brightly drawn. When the light is deviated from the CG model, the CG model is not lighted, so that the CG model is darkly drawn.

The illumination intensity information piece is shown in a scalar value showing the intensity of light emitted from the light source on some scale. When light is not illuminated, the value is 0. The illumination intensity information piece shows that the larger the value is, the stronger intensity the light has. Based on the illumination intensity of the light source, the brightness of the lighted portion of the CG model formed in the virtual space is calculated. That is to say, when the illumination intensity is weak, the CG model is darkly drawn. When the illumination intensity is strong, the CG model is brightly drawn.

The color information piece shows the color of the light emitted from the light source in RGB values showing brightness of red, green and blue components in an 8-bit integer between 0-255. Note that the color information piece does not need to be represented in an 8 bit integer and may be represented in a 16-bit integer or larger and that the color information piece does not need to be represented in RGB and may be represented in other method such as CMYK. Based on the color of the light source, calculation to compensate the color of the CG model formed in the virtual space is executed. For example, when the color of the light source is reddish as shown by (64, 0, 0), the color of the CG model is compensated to be reddish as well.

### «When Camera Moves»

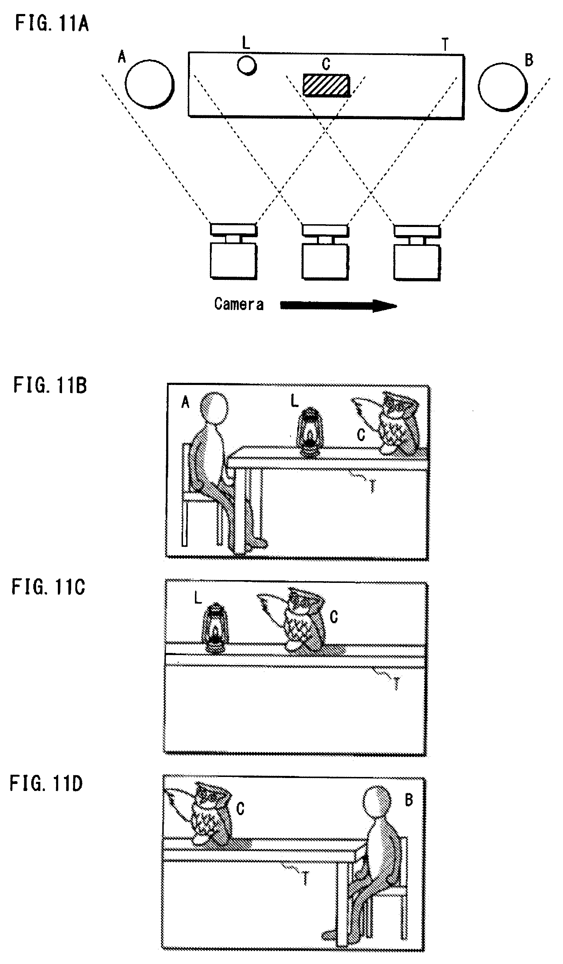

Fig. 11 shows an example of a synthesized video image played back as the camera is moving.

When video is shot by a camera moving from left to right as shown in Fig. 11A, live-action video and CG moves in synchronization with each other as shown in Figs. 11B-11D.

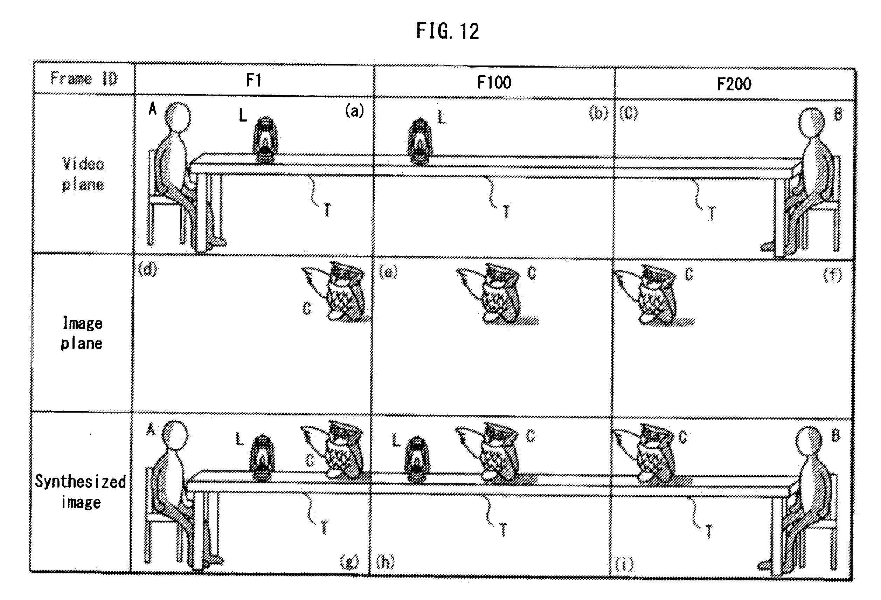

A description is given of how these synthesized video images are synthesized with the use of Figs. 12A-12I.

Figs. 12A-12I show video frames on the following condition, CG images to be synthesized with the video frames, and synthesized video images. A video frame ID identifying a video frame of live-action video shot by a camera at the leftmost position is assumed to be F1. A video frame ID identifying a video frame of live-action video shot by a camera at the center is assumed to be F100. A video frame ID identifying a video frame of live-action video shot by a camera at the rightmost position is assumed to be F200.

First, when the camera is at the leftmost position, the character A and the owl C appear on the screen as shown in Fig. 11B. This video image is generated as follows.

When the camera is at the leftmost position, the camera placement information piece of the camera is assumed to be C1. It is assumed that the camera placement information piece C1 is associated with the video frame ID F2 of the video frame shot at this shooting position.

The demultiplexer 552 outputs the video frame identified by the video frame ID F1 to the video decoder 554. The video frame is decoded by the video decoder 554. The live-action video image shown in Fig. 12A is written in the video plane 557.

In outputting the video frame identified by the video frame ID F1 to the video decoder 554, the demultiplexer 552 outputs the camera placement information piece C1 associated with the video frame ID F1 to the rendering engine 550.

The rendering engine 550 generates an image of the owl C modeled in the virtual space with the use of a camera set at the position shown by the camera placement information piece C1. The CG image shown in Fig. 12D is written in the image plane 556.

The live-action video image as shown in Fig. 12A written in the video plane 557 and the CG image as shown in Fig. 12D written in the image plane 556 are synthesized with each other by the adder 558. Thus, a synthesized video image shown in Fig. 12G can be obtained.

Subsequently, when the camera moves near the center, as shown in Fig. 11C, the character A disappears from the screen, and the owl C appears near the center of the screen. This video image is generated as follows.

When the camera is at the center, the camera placement information piece of the camera is assumed to be C100. The video frame ID F100 identifying the video frame shot at this shooting position is assumed to be associated with the camera placement information piece C 100.

As playback time progresses, the video frame IDs of the video frames to be displayed change, and their associated shooting position information pieces also change.

Accordingly, the live-action video images outputted from the demultiplexer 552 to the video decoder 554 and written in the video plane 557 change as shown from Fig. 12A to Fig. 12B.

Also, since the shooting position information pieces outputted from the demultiplexer 552 to the rendering engine 550 change, the CG images written in the image plane 556 change as shown from Fig. 12D to Fig. 12E.

The live-action video image written in the video plane 557 as shown in Fig. 12B and the CG image written in the image plane 556 as shown in Fig. 12E are synthesized with each other by the adder 558. Thus, the synthesized video image shown in Fig. 12H can be obtained.

Lastly, when the camera moves to the rightmost position, the owl C appears on the left of the screen, and the character B appears as shown in Fig. 11D. This video image is generated as follows.

When the camera is at the rightmost position, the camera placement information piece of the camera is assumed to be C200, and the video frame ID F200 identifying the video frame shot at this shooting position is assumed to be associated with the camera placement information piece C200.

In this case, as with the above case, as the playback time progresses, the video frame IDs identifying the video frames change, and their associated camera placement information pieces also change in accordance with the change.

Accordingly, the live-action video images outputted from the demultiplexer 552 to the video decoder 554 and written in the video plane 557 change as shown from Fig. 12B to Fig. 12C.

Also, since the shooting position information pieces outputted from the demultiplexer 552 to the rendering engine 550 change, the CG images written in the image plane 556 also change as shown from Fig. 12E to Fig. 12F.

The live-action video image written in the video plane 557 as shown in Fig. 12C and the CG image written in the image plane 556 as shown in Fig. 12F are synthesized with each other by the adder 558. Thus, the synthesized video image shown in Fig. 12I can be obtained.

As set forth above, the position of the CG image is adjusted in accordance with the move of live-action video. Thus, the live-action video image and the CG image can be synthesized with each other without causing visual discomfort.

As set forth above, the position of the camera showing the shooting condition of a live-action video image coincides with the move of the live-action video image and the CG image on the screen. Thus, the video that does not cause visual discomfort can be synthesized.

### «When Light Source Moves»

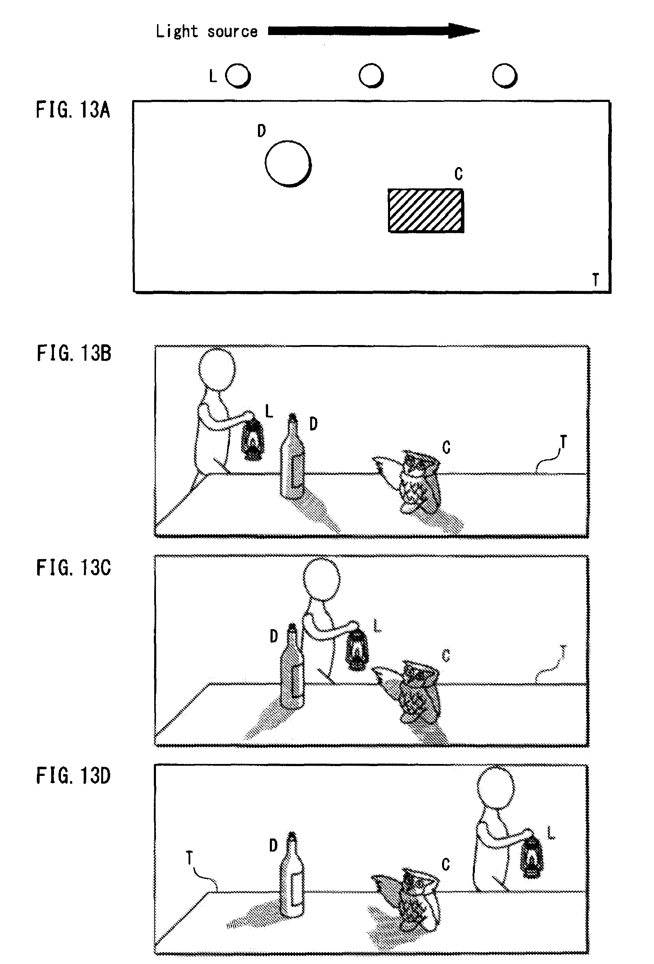

Fig. 13 shows an example of a synthesized video image played back as the light source moves.

A person with the lamp L, which is the light source, moving from left to right as shown in Fig. 13A is shot. Then, shading of the live-action video image and that of the CG image is changed in synchronization with each other as shown in Fig. 13B to Fig. 13D.

When the light source is at the leftmost position as shown in Fig. 13B, the right sides of the bottle D and the owl C are shaded.

When the light source moves near the center, as shown in Fig. 13C, the left side of the bottle D is shaded, and the right side of the owl C is shaded.

When the light source moves to the rightmost position as shown in Fig. 13D, the left side of the owl C is shaded.
These video images are generated as follows. Specifically, according to the examples shown in Figs. 11 and 12, as the camera moves, the shooting position information pieces associated with the video frame IDs identifying the shot video frames change, so that the CG images are changed in accordance with the change of the shooting position information pieces. According to Fig. 13, since the light source setting information pieces change instead of the shooting position information pieces, the shading of the CG images changes in accordance with the change of the light source setting information pieces.

As set forth above, the position of the light source showing the shooting condition of each live-action video image is reflected in generating a CG image. As a result, the move of the shading of the live-action video image coincides with that of the CG image. Thus, synthesized video that does not cause visual discomfort can be generated.

### «Operation of Generating Synthesized Video»

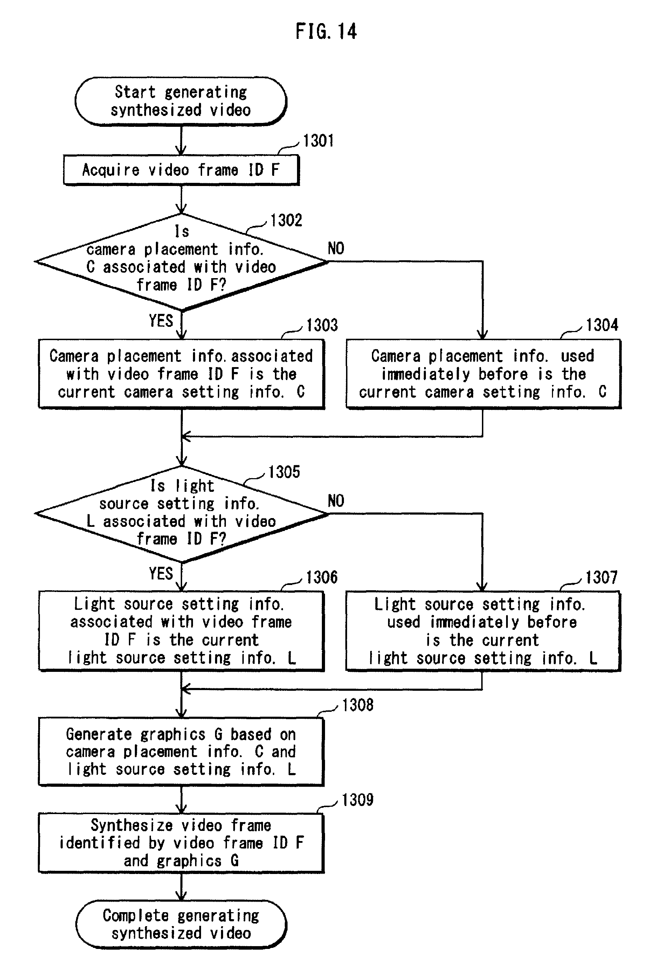

Fig. 14 is a flow chart showing the process to generate synthesized video by synthesizing live-action video and CG. The playback apparatus 100 repeats the following steps for playing back a stream.

First, the video decoder 554 obtains a video frame identified by a video frame ID F from a video stream demultiplexed by the demultiplexer 552. (S 1301)
The video decoder 554 writes the video frame identified by the video frame ID F in the video plane 557, and judges whether the video frame ID F is associated with a camera placement information piece (S1302). If it is associated with a camera placement information piece (S 1302 Y), the camera placement information piece is used as the current camera placement information piece C (S 1303). If not (S1302 N), the immediately preceding camera placement information piece is used as the camera placement information piece C (S 1304).

Similarly, the video decoder 554 judges whether the video frame ID F is associated with a light source setting information piece (S1305). If it is associated with a light source setting information piece (S1305 Y), the light source setting information piece is used as the current light source setting information piece L (S 1306). If not (S 1305 N), the immediately preceding light source setting information piece is used as the current light source setting information piece L (S 1307).

The video decoder 554 notifies the rendering engine 550 of the current camera placement information piece C and the current light source setting information piece L. The rendering engine 550 generates graphics G based on the camera placement information piece C and the light source setting information piece L (S 1308), and writes the graphics G in the image plane 556.

Lastly, the adder 558 detects that the graphics G is written in the image plane 556, reads out the video frame written in the video plane 557 and the graphics G written in the image plane 556, and synthesize them (S1309). The synthesized video is outputted to the TV 101 via the TV output unit 559.

These are the steps for the video decoder 554 to decode one video frame, write it in the video plane 557, and synthesize it with the graphics G with the use of the adder 558. The playback apparatus 100 pertaining to Embodiment repeats the above steps for each video frame. As a result, CG that does not cause visual discomfort when synthesized with live-action video is generated based on the camera placement information piece and the light source setting information piece associated with each video frame of live-action video. Thus, realistic synthesized video can be generated.

### «Supplementary Note»

In Embodiment, a camera placement information piece and a light source setting information piece are used as parameters showing a shooting condition by way of example. Note that, however, only one of them may be used as parameters showing a shooting condition. Needless to say, even if parameters showing another shooting condition are associated with a video frame ID, such a shooting condition may be reflected to a display manner of the generated CG image.

Embodiment shows the example where a video frame ID is associated with a parameter via a PTS. However, instead of the PTS, time information pieces showing display timing of video frames in some order is applicable.

Also, a video frame ID may be directly associated with parameters without a time information piece such as PTS.

### [Industrial Applicability]

The synthesis device of the present invention can be commercially, continually and repeatedly manufactured and sold in the manufacturing industry. Particularly, the playback apparatus is applicable to the film industry and commercial-product industry involved in creating video contents.

### [Reference Signs List]

- 100:: playback apparatus
- 101:: TV
- 102:: remote controller
- 103:: BD-ROM
- 501:: BD-ROM drive
- 502:: track buffer
- 503:: local storage
- 504:: removable medium
- 505:: network interface
- 510:: virtual file system
- 520:: static scenario memory
- 521:: current playlist information
- 522:: current clip information
- 530:: dynamic scenario memory
- 531:: current scenario
- 540:: UO detection module
- 541:: mode management module
- 542:: dispatcher
- 543:: HDMV module
- 544:: BD-J module
- 545:: AV playback library
- 550:: rendering engine
- 551:: image memory
- 552:: demultiplexer
- 553:: image decoder
- 554:: video decoder
- 555:: audio decoder
- 556:: image plane
- 557:: video plane
- 558:: adder
- 559:: TV output unit
- 560:: speaker output unit
- 601:: time information acquisition unit
- 602:: model information acquisition unit
- 603:: light source setting information acquisition unit
- 604:: camera placement information acquisition unit
- 605:: coordinate conversion unit
- 606:: illumination position conversion unit
- 607:: illumination intensity conversion unit
- 608:: illumination direction conversion unit
- 609:: color conversion unit
- 610:: shooting position conversion unit
- 611:: shooting direction conversion unit
- 612:: generation unit
- 613:: shading drawing unit
- 614:: screen projection unit
- 615:: graphics output unit

## Claims

1. A synthesis device comprising:
an acquisition unit operable to acquire, from a digital stream constituted from a plurality of video frames, video frame identifiers identifying the respective video frames, each video frame identifier being associated with a parameter showing a shooting condition under which a corresponding one of the video frames was shot;
a generation unit operable to generate graphics images according to parameters such that shooting conditions shown by the parameters are reflected to display manners of the graphics images; and
a synthesis unit operable to synthesize each video frame and one of the graphics images generated according to a parameter associated with a video frame identifier of the video frame.

2. The synthesis device of Claim 1, wherein
each parameter includes a camera placement information piece showing placement of a camera that shot a corresponding one of the video frames.

3. The synthesis device of Claim 2, wherein
each camera placement information piece includes a shooting position information piece that shows a shooting position of the camera, and
each graphics image generated by the generation unit is an image of an object, formed in a virtual space, that is to be obtained when the object is shot from a shooting position shown by the shooting position information piece.

4. The synthesis device of Claim 3, wherein
the digital stream includes time information pieces each showing a timing at which a corresponding one of the video frames is to be displayed,
each camera placement information pieces is associated with a video frame identifier via a corresponding one of the time information pieces,
the synthesis device further includes a decode unit operable to decode the digital stream,
the decode unit decodes each video frame at a timing indicated by a corresponding one of the time information pieces, and transmits a camera placement information piece with regard to the video frame to the generation unit when the video frame is decoded.

5. The synthesis device of Claim 4, wherein
the digital stream further includes a video frame identifier of a video frame that is not associated with a camera placement information piece,
when a time information piece acquired from the digital stream is associated with a camera placement information piece, the decode unit transmits the camera placement information piece to the generation unit, and
when a time information piece acquired from the digital stream is not associated with a camera placement information piece, the decode unit retransmits a camera placement information piece, which was transmitted to the generation unit last time, to the generation unit.

6. The synthesis device of Claim 5, wherein
each parameter includes a light source setting information piece showing a setting of a light source of a corresponding one of the video frames.

7. The synthesis device of Claim 6, wherein
each light source setting information piece includes an illumination position information piece showing an illumination position of the light source, and
each graphics image generated by the generation unit is an image, of the object in a virtual space, that is to be obtained when the object is illuminated from a position shown by the illumination position information piece.

8. The synthesis device of Claim 7, wherein
each light source setting information piece includes an illumination intensity information piece showing illumination intensity of the light source, and
each graphics image generated by the generation unit is an image, of the object formed in the virtual space, that is to be obtained when the object is illuminated at intensity shown by the illumination intensity information piece.

9. The synthesis device of Claim 2, wherein
each camera placement information piece includes a shooting direction information piece that shows a shooting direction of the camera, and
each graphics image generated by the generation unit is an image, of the object formed in the virtual space, that is to be obtained when the object is shot from a direction shown by the shooting direction information piece.

10. The synthesis device of Claim 2, wherein
each parameter further includes a light source setting information piece showing a position of a light source to shoot a video frame identified by the video frame identifier.

11. The synthesis device of Claim 10, wherein
each light source setting information piece includes an illumination position information piece showing an illumination position of the light source, and
each graphical image generated by the generation unit is an image, of the object formed in the virtual space, that is to be obtained when the object is illuminated from a position shown by the illumination position information piece.

12. The synthesis device of Claim 10, wherein
each light source setting information piece includes an illumination intensity information piece showing illumination intensity of the light source, and
each graphics image generated by the generation unit is an image, of the object formed in the virtual space, that is to be obtained when the object is illuminated at intensity shown by the illumination intensity information piece.

13. The synthesis device of Claim 10, wherein
each light source setting information piece includes a color information piece showing a color of the light source, and
each graphics image generated by the generation unit is an image, of the object formed in the virtual space, that is to be obtained when the object is illuminated by light whose color is shown by the color information piece.

14. The synthesis device of Claim 10, wherein
each light source setting information piece includes an illumination direction information piece showing an illumination direction of the light source, and
each graphics image generated by the generation unit is an image, of the object formed in the virtual space, that is to be obtained when the object is illuminated by light in an illumination direction shown by the illumination direction information piece.

15. A synthesis method comprising:
an acquisition step of acquiring, from a digital stream constituted from a plurality of video frames, video frame identifiers identifying the respective video frames, each video frame identifier being associated with a parameter showing a shooting condition under which a corresponding one of the video frames was shot;
a generation step of generating graphics images according to parameters such that shooting conditions shown by the parameters are reflected to display manners of the graphics images; and
a synthesis step of synthesizing each video frame and one of the graphics images generated according to a parameter associated with a video frame identifier of the video frame.
